# EUROPEAN PATENT SPECIFICATION

(11) **EP 1 371 285 B1**
(45) Date of publication and mention of the grant of the patent: **26.07.2006**
(21) Application number: 03077928.4
(22) Date of filing: 10.05.2000
(51) Int. Cl.: A01K 1/01

(54) **An unmanned vehicle for displacing manure**
Unbemanntes Fahrzeug zum Verschieben von Mist
Véhicule téléguidé de déplacement de fumier

(30) Priority: 25.05.1999 NL 1012143
(43) Date of publication of application: 17.12.2003
(62) Divisional of application: 00927972.0
(73) Proprietor: Lely Enterprises AG, 6300 ZUG (CH)
(72) Inventor: Van den Berg, Karel, 2971 BR Bleskensgraaf (NL)
(74) Representative: Corten, Maurice Jean F.M.

(56) References cited:
- EP-A- 0 402 764
- EP-A- 0 943 235
- WO-A-97/31524
- US-A- 2 966 256
- US-A- 4 854 005
- US-A- 5 309 592
- US-A- 5 444 893

## Description

The invention relates to an unmanned vehicle according to the preamble of claim 1.Such an unmanned vehicle is known from the document US-A-5 309 592.

In modern stables there is usually applied a stable floor in which there are provided apertures for letting through cow manure. Under the stable floor there is provided a receptacle in which the manure passed through is collected. Generally there is provided in the stable a so-called manure slide which moves through the stable at fixed points of time and displaces the manure partially to the dung pit and partially through the apertures in the stable floor.

A new development is an unmanned vehicle for displacing manure. Such an implement is known from e.g. Messrs. Joz B.V. as the JOZTECH (Landbouw Rai (Agricultural Rai), Amsterdam, January 1999). This implement is provided with a first propelling unit comprising two freely rotatable wheels and a second propelling unit comprising one driven and controllable wheel. The disadvantage of said implement is that the construction of the driven and controllable wheel is complicated and therefore expensive. Moreover, the construction is very sensitive to dirt, which is not desirable in the stable environment. Finally, the JOZTECH is driven by only one controllable wheel, so that wheel skidding often occurs on the stable floor which is very slippery due to the presence of manure. As a result thereof it is not possible to determine the exact position of the vehicle on the basis of the number of revolutions of the driven wheel.

The invention aims at obviating the above-mentioned drawbacks by means of an unmanned vehicle according to the characterizing part of claim 1. The orientation means comprise floor detection means for detecting apertures in the floor and/or detecting a guide means in the floor, such as the reinforcement in the concrete or an electricity conducting wire. The apertures in the floor are usually provided for removing the manure as described above. When the stable floor is made of concrete, there is usually applied a metal grid in the floor for giving it extra strength. Said grid can be detected by means of the floor detection means with the aid of e.g. an induction coil. Additional orientation means may comprise a compass and/or a gyroscope and/or a spirit level and/or a clinometer and/or an acceleration meter. These orientation means are nowadays available in a form which is suitable for being applied in electronic circuits, so that integrated orientation means can easily be composed from the various components.

Besides, the orientation means also comprise wall following means for detecting and following a wall, such as a fixed stable wall or the edge of a cubicle. These wall following means extend over at least part of the circumference of the unmanned vehicle. The wall following means may also be disposed on the manure displacing means. In a preferred embodiment, the wall following means consist of a freely rotating substantially round element, such as preferably a wheel and/or a disc and/or a sphere.

The invention further relates to an unmanned vehicle for displacing manure over a stable floor, comprising a steering unit for steering the vehicle and a frame with first, second and third supporting means for supporting the frame on the floor, while the first and second supporting means are rollable relative to the floor and the third supporting means comprise manure displacing means for displacing manure, the first supporting means comprising a propelling unit for propelling the vehicle, said propelling unit comprising two independently drivable propelling members and the steering unit is constituted by the propelling unit, characterized in that the unmanned vehicle is equipped with protective facilities for protecting the vehicle against obstacles, such as a cow's leg. The protective facilities may comprise a bumper and/or a sensor for detecting cows. The protective facilities may also comprise wall following means. The protective facilities may also comprise positioning means for determining the position of an obstacle relative to the unmanned vehicle. The positioning means may also comprise a clinometer and/or an acceleration meter. The positioning means are preferably disposed on the wall following means. In this manner it is possible to determine the angular deflection and angular acceleration of e.g. the wall following means, so that information is obtained regarding the position of the obstacle. The signal from the positioning means is used for actuating the steering unit.

The invention further relates to an unmanned vehicle for displacing manure over a stable floor, comprising a steering unit for steering the vehicle and a frame with first, second and third supporting means for supporting the frame on the floor, while the first and second supporting means are rollable relative to the floor and the third supporting means comprise manure displacing means for displacing manure, the first supporting means comprising a propelling unit (2) for propelling the vehicle, said the propelling unit comprising two independently drivable propelling members and the steering unit is constituted by the propelling unit, characterized in that the unmanned vehicle is equipped with anti-bumping means for preventing the manure displacing means from moving too far away from the floor. The anti-bumping means comprise a bumper and/or a bracket. The anti-bumping means preferably comprise an anti-bumping sensor for detecting the movement of the manure displacing means away from the floor, which anti-bumping sensor is coupled to the propelling unit. Such an anti-bumping sensor may consist of a switch which is disposed on the bumper or bracket. When the manure slide moves too far away from the stable floor, the switch touches the stable floor, whereupon the unmanned vehicle is caused to run in an opposite direction and bears again with all its supporting means on the stable floor.

The invention further relates to an unmanned vehicle for displacing manure over a stable floor, comprising a steering unit for steering the vehicle and a frame with first, second and third supporting means for supporting the frame on the floor, while the first and second supporting means are rollable relative to the floor and the third supporting means comprise manure displacing means for displacing manure, the first supporting means comprising a propelling unitfor propelling the vehicle, characterized in that the propelling unit comprises two independently drivable propelling members and the steering unit is constituted by the propelling unit. The advantage of this unmanned vehicle is that the drive unit of the propelling members also constitutes the steering unit of the unmanned vehicle. Accordingly, there is achieved a compact construction which is insensitive to dirt and which, besides, is less complicated, so that lower manufacture costs are involved.

According to a further inventive feature, at least one of the supporting means is provided with pressure setting means for setting the pressure with which the manure displacing means press on the floor. Therefore, the invention relates to an unmanned vehicle for displacing manure over a stable floor, comprising a steering unit for steering the vehicle and a frame with first, second and third supporting means for supporting the frame on the floor, while the first and second supporting means are rollable relative to the floor and the third supporting means comprise manure displacing means for displacing manure, the first supporting means comprising a propelling unit for propelling the vehicle, characterized in that at least one of the supporting means is provided with pressure setting means for setting the pressure with which the manure displacing means press on the floor. The second propelling unit comprises at least one freely rotatable propelling member. The propelling members are preferably designed as a wheel and/or a caterpillar track. In a preferred embodiment the rotatable propelling member consists of a castor wheel as a result of which the unmanned vehicle has an excellent manoeuvrability. Caterpillar tracks have the advantage of being less sensitive to skidding than wheels.

In accordance with another inventive feature, the unmanned vehicle is equipped with orientation means for following a path in a space, or determining the position of the vehicle in a space, such as a stable or a meadow. The orientation means comprise floor detection means for detecting apertures in the floor and/or detecting a guide means in the floor, such as the reinforcement in the concrete or an electricity conducting wire. The apertures in the floor are usually provided for removing the manure as described above. When the stable floor is made of concrete, there is usually applied a metal grid in the floor for giving it extra strength. Said grid can be detected by means of the floor detection means with the aid of e.g. an induction coil. Additional orientation means may comprise a compass and/or a gyroscope and/or a spirit level and/or a clinometer and/or an acceleration meter. These orientation means are nowadays available in a form which is suitable for being applied in electronic circuits, so that integrated orientation means can easily be composed from the various components.

Besides, the orientation means also comprise wall following means for detecting and following a wall, such as a fixed stable wall or the edge of a cubicle. These wall following means extend over at least part of the circumference of the unmanned vehicle. The wall following means may also be disposed on the manure displacing means. In a preferred embodiment, the wall following means consist of a freely rotating substantially round element, such as preferably a wheel and/or a disc and/or a sphere.

According to another inventive feature, the unmanned vehicle is equipped with protective facilities for protecting the vehicle against obstacles, such as cows' legs, or fixed objects, such as supporting pillars in the stable. The protective facilities may comprise a bumper and/or a sensor for detecting cows. The protective facilities may also comprise wall following means. The protective facilities may also comprise positioning means for determining the position of an obstacle relative to the unmanned vehicle. The positioning means may also comprise a clinometer and/or an acceleration meter. The positioning means are preferably disposed on the wall following means. In this manner it is possible to determine the angular deflection and angular acceleration of e.g. the wall following means, so that information is obtained regarding the position of the obstacle. The signal from the positioning means is used for actuating the steering unit.

The manure displacing means preferably comprise at least one brush and/or at least one manure slide and/or at least one spraying unit.

In accordance with a last inventive feature, the unmanned vehicle is equipped with anti-bumping means for preventing the manure displacing means from moving too far away from the floor. The anti-bumping means comprise a bumper and/or a bracket. The anti-bumping means preferably comprise an anti-bumping sensor for detecting the movement of the manure displacing means away from the floor, which anti-bumping sensor is coupled to the propelling unit. Such an anti-bumping sensor may consist of a switch which is disposed on the bumper or bracket. When the manure slide moves too far away from the stable floor, the switch touches the stable floor, whereupon the unmanned vehicle is caused to run in an opposite direction and bears again with all its supporting means on the stable floor.

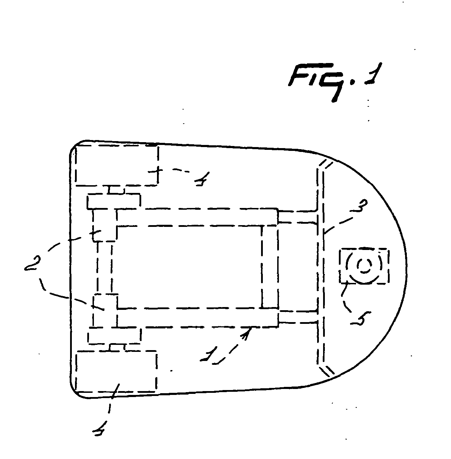

The invention will now be explained in further detail with reference to the accompanying drawing, in which
Figure 1 is a plan view of the unmanned vehicle.

The unmanned vehicle as shown in Figure 1 consists of a frame 1 to which there are fitted a castor wheel 5, the propelling unit 2 and the manure slide 3. The steering unit is constituted by the propelling unit 2, which propelling unit 2 comprises two independently driven wheels 4. In this embodiment manoeuvring the vehicle is possible by varying the drive torque or the peripheral velocity of the wheels 4. The wheels 4 may comprise a wheel and/or a caterpillar track.

## Claims

1. An unmanned vehicle for displacing manure over a stable floor, comprising a steering unit for steering the vehicle and a frame (1) with first, second and third supporting means for supporting the frame (1) on the floor, while the first and second supporting means are rollable relative to the floor and the third supporting means comprise manure displacing means for displacing manure, the first supporting means comprising a propelling unit (2) for propelling the vehicle, said propelling unit comprising two independently drivable propelling members and the steering unit is constituted by the propelling unit, **characterized in that** the unmanned vehicle is equipped with anti-bumping means for preventing the manure displacing means from moving too far away from the floor, with protective facilities for protecting the vehicle against obstacles, said protective facilities comprising wall following means and positioning means for determining the position of an obstacle relative to the unmanned vehicle, said positioning means being disposed on the wall following means, said positioning means are adapted to provide a signal for actuating the steering unit.

2. An unmanned vehicle as claimed in claim 1, **characterized in that** the anti-bumping means comprise a bumper and/or a bracket.

3. An unmanned vehicle as claimed in claim 1 or 2, **characterized in that** the anti-bumping means preferably comprise an anti-bumping sensor for detecting the movement of the manure displacing means away from the floor, which anti-bumping sensor is coupled to the propelling unit.

4. An unmanned vehicle as claimed in claim 3, **characterized in that** the anti-bumping sensor consists of a switch which is disposed on the bumper or bracket.

5. An unmanned vehicle as claimed in claim 4, **characterized in that** when the manure slide moves too far away from the stable floor, the switch touches the stable floor, whereupon the unmanned vehicle is caused to run in an opposite direction and bears again with all its supporting means on the stable floor.

## Patentansprüche

1. Unbemanntes Fahrzeug zum Verlagern von Mist auf einem Stallboden mit einer Lenkvorrichtung zum Lenken des Fahrzeuges und einem Rahmen (1) mit einer ersten, zweiten und dritten Stützvorrichtung zum Abstützen des Rahmens (1) auf dem Boden, wobei die erste und die zweite Stützvorrichtung auf dem Boden abrollbar sind und die dritte Stützvorrichtung eine Mistverlagerungsvorrichtung zum Verlagern von Mist umfaßt, wobei die erste Stützvorrichtung eine Antriebseinheit (2) zum Antreiben des Fahrzeuges umfaßt, wobei die Antriebseinheit zwei unabhängig antreibbare Antriebsglieder umfaßt und die Lenkvorrichtung durch die Antriebseinheit gebildet ist, **dadurch gekennzeichnet, daß** das unbemannte Fahrzeug mit einer Antiprellvorrichtung versehen ist, um zu verhindern, daß sich die Mistverlagerungsvorrichtung zu weit vom Boden entfernt, und mit Schutzvorrichtungen, um das Fahrzeug gegen Hindernisse zu schützen, wobei die Schutzvorrichtungen Wandfolgevorrichtungen und Positioniervorrichtungen umfassen, um die Position eines Hindernisses relativ zu dem unbemannten Fahrzeug zu bestimmen, wobei die Positioniervorrichtungen auf den Wandfolgevorrichtungen angeordnet sind, wobei die Positioniervorrichtungen dazu ausgelegt sind, ein Signal zur Betätigung der Lenkvorrichtung zu erzeugen.

2. Unbemanntes Fahrzeug nach Anspruch 1,
**dadurch gekennzeichnet, daß** die Antiprellvorrichtung einen Stoßfänger und/oder einen Bügel umfaßt.

3. Unbemanntes Fahrzeug nach Anspruch 1 oder 2,
**dadurch gekennzeichnet, daß** die Antiprellvorrichtung vorzugsweise einen Antiprellsensor umfaßt, um das Sichentfernen der Mistverlagerungsvorrichtung vom Boden zu detektieren, wobei der Antiprellsensor mit der Antriebseinheit gekoppelt ist.

4. Unbemanntes Fahrzeug nach Anspruch 3,
**dadurch gekennzeichnet, daß** der Antiprellsensor aus einem Schalter besteht, der auf dem Stoßfänger oder Bügel angeordnet ist.

5. Unbemanntes Fahrzeug nach Anspruch 4,
**dadurch gekennzeichnet, daß** der Schalter den Stallboden berührt, wenn sich der Mistschieber zu weit vom Stallboden entfernt, worauf das unbemannte Fahrzeug in eine entgegengesetzte Richtung fährt und erneut mit all seinen Stützvorrichtungen auf dem Stallboden aufliegt.

## Revendications

1. Véhicule téléguidé de déplacement de fumier sur un sol d'écurie, comprenant un dispositif de commande pour diriger le véhicule et un châssis (1) avec un premier, un deuxième et un troisième dispositifs de soutien pour soutenir le châssis (1) sur le sol, tandis que le premier et le deuxième dispositifs de soutien peuvent rouler par rapport au sol et le troisième dispositif de soutien comprend un dispositif de déplacement du fumier pour déplacer le fumier, le premier dispositif de soutien comprenant un dispositif de propulsion (2) pour propulser le véhicule, ledit dispositif de propulsion comprenant deux éléments de propulsion pouvant être dirigés indépendamment l'un de l'autre et le dispositif de commande est constitué du dispositif de propulsion, **caractérisé en ce que** le véhicule téléguidé est équipé d'un dispositif anti-chocs pour empêcher le dispositif de déplacement du fumier de trop s'éloigner du sol, avec des installations de protection afin de protéger le véhicule contre les obstacles, lesdites installations de protection comprenant des moyens de suivre les murs et des moyens de positionnement afin de déterminer la position d'un obstacle par rapport au véhicule téléguidé, lesdits moyens de positionnement étant placés sur les moyens de suivi des murs, lesdits moyens de positionnement sont adaptés pour émettre un signal actionnant le dispositif de commande.

2. Véhicule téléguidé selon la revendication 1, **caractérisé en ce que** le dispositif anti-chocs comprend un pare-chocs et/ou un support inférieur.

3. Véhicule téléguidé selon la revendication 1 ou 2, **caractérisé en ce que** le dispositif anti-chocs comprend de préférence un capteur anti-chocs pour détecter le mouvement du dispositif de déplacement du fumier loin du sol, lequel capteur anti-chocs est couplé au dispositif de propulsion.

4. Véhicule téléguidé selon la revendication 3, **caractérisé en ce que** le capteur anti-chocs comprend un commutateur disposé sur le pare-chocs ou le support inférieur.

5. Véhicule téléguidé selon revendication 4, **caractérisé en ce que** lorsque la glissière de fumier s'éloigne trop du sol de l'écurie, le commutateur touche le sol de l'écurie, sur lequel le véhicule téléguidé doit se déplacer dans une direction opposée et pèse de nouveau avec tous ses supports sur le sol de l'écurie.
